Europäisches Patentamt

(19) European Patent Office

Office européen des brevets

(11) **EP 0 694 909 B1**

(12) **FASCICULE DE BREVET EUROPEEN**

(45) Date de publication et mention
de la délivrance du brevet:
**17.10.2001 Bulletin 2001/42**

(51) Int Cl.$^7$: **G11B 5/245**, G11B 5/49,
G11B 5/11

(21) Numéro de dépôt: **95401684.6**

(22) Date de dépôt: **13.07.1995**

(54) **Tête magnétique à élément saturable et dispositif matriciel comportant un ensemble de têtes magnétiques**

Magnetkopf mit sättigbarem Element und Matrixanordnung bestehend aus einem Satz von Magnetköpfen

Magnetic head with saturable element and matrix device comprising a set of magnetic heads

(84) Etats contractants désignés:
**DE FR GB IT NL**

(30) Priorité: **26.07.1994 FR 9409223**

(43) Date de publication de la demande:
**31.01.1996 Bulletin 1996/05**

(73) Titulaire: **Thales
75008 Paris (FR)**

(72) Inventeurs:
• **Lehureau, Jean-Claude
F-92402 Courbevoie Cedex (FR)**
• **Pirot, François-Xavier
F-92402 Courbevoie Cedex (FR)**

(74) Mandataire: **Guérin, Michel et al
Thomson-CSF Propriété Intellectuelle,
13, Avenue du Président Salvador Allende
94117 Arcueil Cédex (FR)**

(56) Documents cités:
**EP-A- 0 333 347     EP-A- 0 376 459
EP-A- 0 409 673     US-A- 3 414 893
US-A- 3 662 361     US-A- 4 322 763**

• **PATENT ABSTRACTS OF JAPAN vol. 7 no. 75 (P-187) [1220] ,29 Mars 1983 & JP-A-58 006518 (NIPPON DENKI K. K.) 14 Janvier 1983,**
• **PATENT ABSTRACTS OF JAPAN vol. 13 no. 261 (P-885) [3609] ,16 Juin 1989 & JP-A-01 055710 (Y II DATA K. K.)**

## Description

L'invention est relative à une tête magnétique, destinée notamment à faire partie d'un dispositif matriciel d'enregistrement et/ou de lecture.

Une tête magnétique est un dispositif d'inscription et/ou de lecture d'informations sur un support magnétique notamment une bande. L'inscription est réalisée en faisant varier localement l'aimantation du support. Ce type de tête magnétique peut être utilisé dans des enregistreurs magnétiques servant par exemple en informatique ou dans du matériau embarqué ou bien dans des magnétoscopes aussi bien à usage professionnel que grand public.

Une telle tête comprend un circuit magnétique avec deux pôles magnétiques séparés par un entrefer amagnétique. Pour l'inscription d'informations, un champ magnétique est induit dans le circuit magnétique et le support magnétique est disposé à proximité des pôles et de l'entrefer. De ce fait, le circuit magnétique se ferme par le support magnétique au droit de l'entrefer, ce qui permet l'aimantation ou la désaimantation du support à cet endroit.

La lecture d'informations inscrites sur le support est obtenue par un signal électrique qui résulte d'une force électromotrice induite par la variation de flux magnétique dans le circuit magnétique formé par le support. Cette variation de flux provient de la variation de l'aimantation du support lors d'un déplacement relatif du support et de la tête.

Dans un dispositif matriciel d'enregistrement, on considère en règle générale qu'il existe un rapport 3 entre le niveau d'excitation des têtes adressées et les signaux parasites présents sur les têtes non adressées. C'est le support magnétique qui assure l'effet de seuil discriminant entre les niveaux de signaux d'écriture et les niveaux de signaux parasites. A fort champ d'écriture, il apparaît des effets de saturation qui réduisent ce rapport 3. Il a été proposé dans le brevet FR 2 639 137 de placer dans l'entrefer un élément en matériau magnétique à saturation inférieure à celle du matériau des pôles. Lorsque le matériau saturable n'est pas saturé, le champ magnétique reste confiné dans le circuit magnétique et ne passe par le support. Lorsque ce matériau est saturé, le champ magnétique ne reste pas confiné dans l'entrefer. Une partie de ce champ passe par le support et l'aimante. Une inscription n'est réalisée que lorsque le courant produisant l'excitation dépasse un seuil prédéterminé.

Toutefois l'élément saturable introduit dans l'entrefer ne peut conduire qu'un faible flux magnétique en raison de ses dimensions. Ce matériau sature rapidement et l'écriture a lieu pour de faibles excitations. Son effet est presque négligeable. Cet inconvénient est particulièrement sensible pour les dispositifs matriciels à pistes étroites. Il n'est pas rare que la surface de l'entrefer perpendiculaire au support magnétique soit de l'ordre de quelques dizaines de micromètres au carré.

Dans la demande de brevet EP-A-0 409 673, il y a un élément saturable commandable électriquement qui est placé en parallèle avec l'entrefer.

La présente invention vise à remédier à ces inconvénients. Elle propose une tête magnétique avec au moins un élément saturable efficace. Cette tête permet d'améliorer la qualité du signal enregistré sur le support magnétique. La présence de l'élément saturable réalise un court circuit efficace du flux magnétique parasite et l'écriture n'a lieu que pour des courants d'écriture importants.

Pour cela, la tête magnétique selon l'invention comporte un circuit magnétique avec deux pôles séparés par un entrefer et au moins un élément saturable en-dehors de l'entrefer et en parallèle avec l'entrefer, cet élément étant sans commande électrique.

Cet élément saturable peut être placé au dessous de l'entrefer ou bien sensiblement dans le même plan ou bien encore dans un plan situé au dessus de celui de l'entrefer. Dans une réalisation préférée de l'invention l'élément saturable est au moins en partie une extension de l'un des pôles.

De préférence, l'élément saturable a un point de saturation plus bas que celui des pôles.

L'invention concerne aussi un dispositif matriciel magnétique comportant une pluralité de têtes magnétiques.

L'invention concerne aussi un procédé de fabrication d'une telle tête.

L'invention est spécifiée dans les revendications.

D'autres caractéristiques et avantages de l'invention apparaîtront plus clairement dans la description qui suit et dans les figures annexées qui représentent :

- les figures 1a et 1b respectivement un schéma en coupe d'une tête magnétique selon l'invention et son circuit électrique équivalent ;

- la figure 2 une vue de dessus d'une variante d'une tête magnétique selon l'invention;
- la figure 3 une vue éclatée d'un dispositif magnétique matriciel selon l'invention;
- les figures 4a et 4b des vues éclatées de deux variantes d'un dispositif magnétique matriciel selon l'invention;
- les figures 5a à 5f, en coupe selon l'axe a-a, les différentes étapes de réalisation des têtes magnétiques de la figure 3 par le procédé selon l'invention;
- les figures 6a à 6f, en coupe, différentes étapes de réalisation des têtes magnétiques de la figure 4a par une variante du procédé selon l'invention;
- les figures 7a à 7i, en coupe transversale, les différentes étapes de réalisation de têtes magnétiques par encore une variante du procédé selon l'invention;
- les figures 8a à 8e en coupe transversale, des étapes de réalisation de têtes magnétiques selon l'invention à effectuer à partir des deux substrats élémentaires pris aux étapes 7c et 7e;

- les figures 9a à 9e, en coupe, différentes étapes de réalisation des têtes magnétiques de la figure 4b par encore une autre variante du procédé selon l'invention.

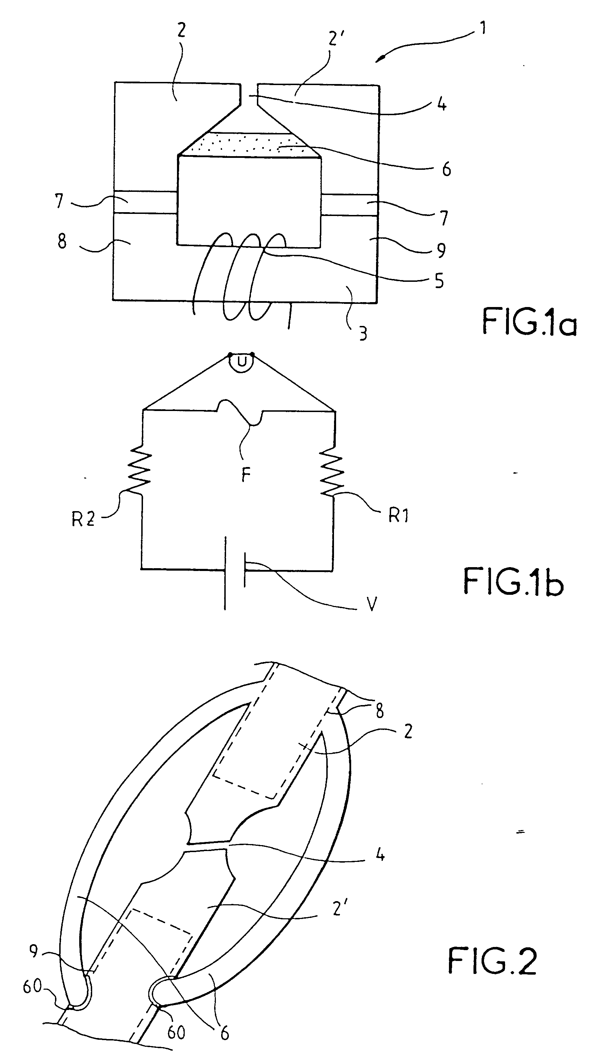

La figure 1a représente schématiquement un exemple d'une tête magnétique selon l'invention. La figure 1b représente un circuit électrique équivalent à la tête magnétique de la figure 1a.

Cette tête magnétique est formée d'un circuit magnétique 1 comportant un substrat magnétique 3 avec deux plots 8, 9 en saillie surmontés chacun d'un pôle 2,2'. Les pôles 2,2' en vis à vis sont séparés par un entrefer 4 amagnétique. Un bobinage 5 est associé au circuit magnétique 1 en vue de produire un champ magnétique pour l'inscription d'une information sur un support magnétique (non représenté) qui est disposé au voisinage de l'entrefer 4 et des pôles 2,2'. Au moins un élément saturable 6 placé en-dehors de l'entrefer 4 relie magnétiquement deux parties du circuit magnétique, Il est en parallèle avec l'entrefer 4 au point de vue circulation du flux magnétique. Ici la liaison entre l'élément saturable 6 et le circuit magnétique se fait au niveau des pôles 2,2'. Cet élément saturable 6 est sans commande électrique, il n'est parcouru par aucun courant électrique.

L'élément saturable 6 est réalisé dans un matériau magnétique et cet élément saturable a, de préférence, un point de saturation plus bas que celui des pôles 2,2'. Lorsque élément saturable n'est pas saturé, pour un courant d'excitation dans le bobinage, inférieur à un courant de seuil, le champ magnétique reste dans l'élément saturable et n'atteint pas l'entrefer. Lorsque l'élément saturable est saturé, pour un courant d'excitation supérieur au courant de seuil, le champ magnétique atteint l'entrefer et le flux magnétique s'échappe de l'entrefer pour inscrire le support magnétique.

De manière classique, il est préférable de prévoir au moins un élément amagnétique 7 dans le circuit magnétique en-dehors de l'entrefer. Cet élément amagnétique 7 vise à renforcer l'effet de l'élément saturable 6 en augmentant la réluctance totale du circuit magnétique. Cet élément amagnétique 7 est générateur d'un champ magnétique de fuite ce qui augmente encore le courant d'excitation nécessaire pour l'écriture.

Dans l'exemple représenté, il y a deux éléments amagnétiques 7 dans le circuit magnétique, l'élément saturable 6 étant relié au circuit magnétique entre les éléments amagnétiques 7 et les pôles 2,2'. Les éléments amagnétiques 7 surmontent les plots 8,9.

Sur la figure 1b, on voit que le bobinage 5 est équivalent à une source d'alimentation V, les éléments amagnétiques 7 a des résistances R1,R2 et l'élément saturable 6 à un fusible F. L'entrefer 4 est représenté par la tension U aux bornes du fusible F. Les résistances R1,R2 et la source V sont en série. Chaque résistance est montée entre la source V et le fusible F.

Au lieu d'utiliser un seul élément saturable il est possible d'en utiliser plusieurs dans une même tête magnétique. C'est ce qu'illustre la figure 2.

Au lieu de placer l'élément saturable en dessous de l'entrefer il est possible de le disposer dans le même plan que l'entrefer et les pôles ou même au dessus de l'entrefer.

La figure 2 représente schématiquement un exemple d'une tête magnétique 1 selon l'invention vue de dessus. On voit partiellement les deux pôles 2 et 2' en forme de languettes et en pointillés les deux plots 8, 9. Les deux pôles 2, 2' se font face et sont séparés par l'entrefer 4. Ils contribuent à limiter l'entrefer 4. Deux éléments saturables 6 sont représentés, ils sont disposés de part et d'autre de l'entrefer 4. Ces éléments saturables 6 sont des extensions du pôle 2. Ils se projettent à partir du pôle 2 vers le pôle 2'. L'extrémité de l'élément saturable 6 située au dessus du plot 9 qui est surmonté du pôle 2', est séparée du pôle 2' par un intervalle amagnétique 60. Tels des ponts, ces éléments saturables 6 relient les deux pôles 2,2' en enjambant l'entrefer 4. Dans cette configuration, les deux éléments saturables 6 sont dans le même plan que l'entrefer et les pôles. Pour une même épaisseur, le volume des deux éléments saturables 6 est bien supérieur à celui de l'élément saturable placé dans l'entrefer tel que décrit dans le brevet FR-2 639 137.

La présente invention concerne aussi un dispositif matriciel d'enregistrement comportant une pluralité de têtes magnétiques.

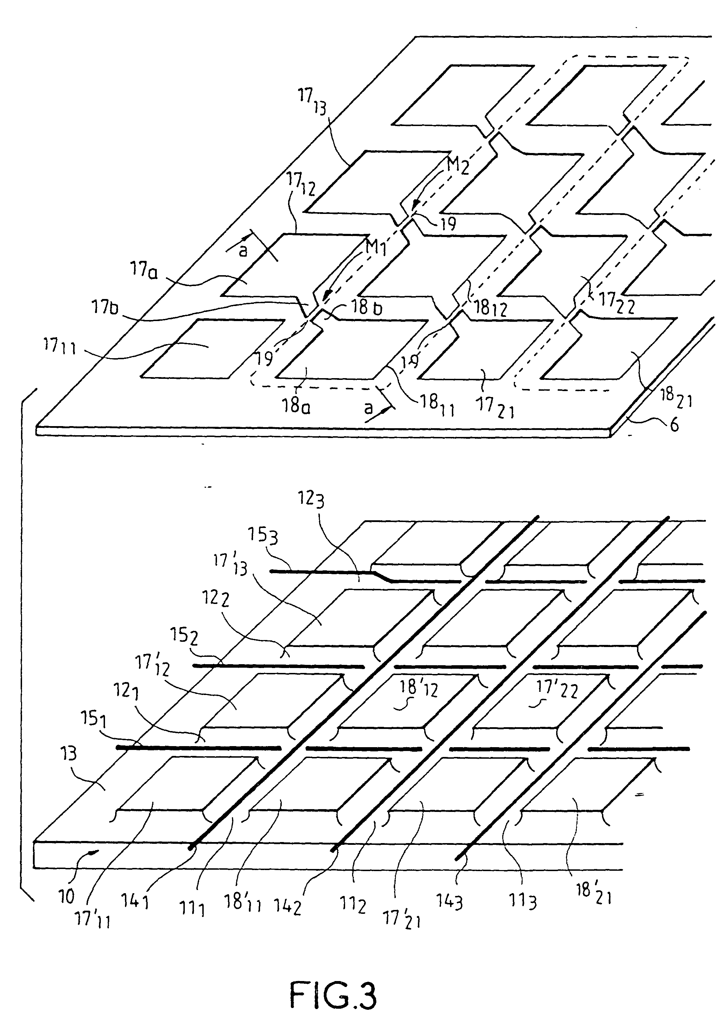

La figure 3 représente en perspective éclatée un exemple d'un dispositif matriciel selon l'invention.

Ce dispositif matriciel comporte un substrat 10 en matériau magnétique tel qu'une ferrite avec une première série de rainures rectilignes $11_1$, $11_2$, $11_3$,...et une seconde série de rainures rectilignes $12_1$, $12_2$, $12_3$,... sur l'une de ses faces 13.

Les rainures $11_1$, $11_2$, $11_3$... sont parallèles entre elles et forment des colonnes tandis que les rainures $12_1$, $12_2$, $12_3$,.. sont de préférence sensiblement perpendiculaires aux colonnes et forment des lignes.

Dans chaque rainure est disposé un conducteur électrique d'excitation $14_1$, $14_2$, $14_3$,...,$15_1$, $15_2$, $15_3$... . Le conducteur colonne $14_1$ est disposé dans la rainure $11_2$,..., le conducteur ligne $15_1$ se trouve dans la rainure $12_1$ etc....

Les rainures $11_1$, $11_2$... et $12_1$, $12_2$... délimitent un réseau matriciel de plots en saillie. Ce réseau est formé d'une alternance de colonnes de premiers plots $17'_{ij}$ et de seconds plots $18'_{kj}$ avec :

- i entier compris entre un et le nombre de colonnes de premiers plots ;
- j entier compris entre un et le nombre de plots par colonnes ;
- k entier compris entre un et le nombre de colonnes de seconds plots. On a supposé que toutes les colonnes avaient le même nombre de plots. Dans certaines configurations, il pourrait en être autrement.

Le substrat 10 en matériau magnétique a sa face 13 rainurée recouverte d'une couche 6 en matériau magnétique qui forme l'élément saturable. Cette couche 6 est surmontée de colonnes de premiers pôles $17_{ij}$ au-dessus des premiers plots $17'_{ij}$ et de colonnes de seconds pôles $18_{kj}$ au-dessus des seconds plots $18'_{kj}$.

Les pôles $17_{ij}$ et $18_{kj}$ possèdent une partie de plus grande surface, respectivement $17a$ et $18a$ sensiblement carrée ou rectangulaire qui couvre le plot correspondant $17'_{ij}$, $18'_{kj}$ ainsi qu'un prolongement $17_b$, $18_b$ d'au moins un de ses coins au voisinage de l'intersection des conducteurs. Des entrefers 19 sont formés entre deux prolongements $17_b$ et $18_b$ en vis-à-vis. La direction de ces prolongements correspond sensiblement à une diagonale c'est-à-dire environ 45° par rapport aux lignes et colonnes.

Dans cet exemple, une tête magnétique, M1 par exemple, comporte un circuit magnétique formé d'une portion du substrat 10 délimitée par les deux plots $17'_{12}$, $18'_{11}$ et l'intersection des rainures $11_1$, $12_1$, des deux pôles $17_{12}$, $18_{11}$, de l'élément saturable 6 et de l'entrefer 19 qui se trouve entre les prolongements $17_b$ et $18_b$ des deux pôles $17_{12}$ et $18_{11}$ et des conducteurs d'excitation $14_1$ et $15_1$.

L'élément saturable 6 relie magnétiquement deux parties du circuit magnétique qui sont ici les deux plots $17'_{12}$ et $18'_{11}$. Cet élément est situé en dessous de l'entrefer 19 et des pôles $17_{12}$, $18_{11}$. Il est représenté sous forme d'une couche sur la figure 3.

Si l'on désire placer l'élément saturable 6 dans le même plan ou au dessus des pôles et de l'entrefer, il est possible de remplir les rainures d'un matériau amagnétique tel qu'une résine de manière à ce que le substrat 10 ait une surface plane du côté des plots. On peut alors réaliser les pôles, l'entrefer et l'élément saturable sur cette surface.

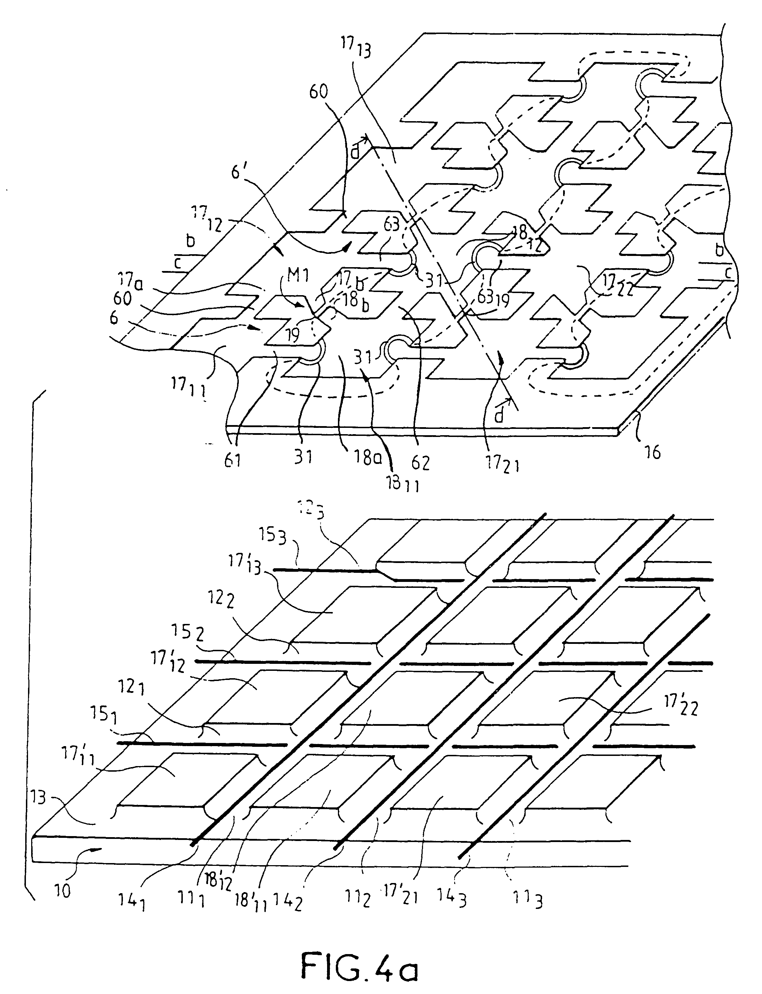

La figure 4a représente une autre variante d'un dispositif matriciel d'enregistrement selon l'invention qui comporte plusieurs éléments saturables par tête magnétique dans le même plan que les pôles. Ce dispositif comporte comme précédemment un substrat 10 en matériau magnétique rainuré avec des plots $17'_{ij}$, $18'_{kj}$ en saillie et des conducteurs électriques d'excitation $14_1$, $14_2$, $14_3$,... $15_1$, $15_2$,... dans les rainures. Ce substrat 10 est recouvert d'une plaque 16 en matériau amagnétique sur laquelle sont disposés les pôles $17_{ij}$, $18_{kj}$, les entrefers 19 et les éléments saturables 6 et 6'. Chaque plot $17'_{ij}$ et $18'_{kj}$ est surmonté d'un pôle respectivement $17_{ij}$ et $18_{kj}$. Dans cette variante, chaque élément saturable 6, 6' est situé dans le même plan que les pôles $17_{ij}$, $18_{kj}$. Le circuit magnétique de la tête magnétique M1 comportant les pôles $17_{12}$, $18_{11}$ et l'entrefer 19 situé entre ces deux pôles contient aussi deux éléments saturables 6 et 6'. Chaque élément saturable relie magnétiquement les deux pôles d'une tête par l'intermédiaire d'au moins un troisième pôle voisin d'au moins un des pôles de la tête considérée. Un seul élément saturable 6 ou 6' aurait pu intervenir. Ces éléments saturables 6 et 6' sont des extensions des pôles.

Ainsi dans l'exemple de la figure 4a pour la tête magnétique M1, l'élément saturable 6 est formé d'un premier pont saturable 60 qui relie le premier pôle $17_{12}$ de la tête magnétique M1 au pôle voisin $17_{11}$ de la même colonne et d'un second pont saturable 61 issu du pôle $17_{11}$ et se projetant vers le second pôle $18_{11}$ de la tête magnétique M1. L'extrémité du pont 61 qui se trouve au-dessus du plot $18'_{11}$ est séparée du pôle $18_{11}$ par un intervalle amagnétique 31.

L'élément saturable 6' est formé d'un premier pont saturable 62 qui relie le second pôle $18_{11}$ de la tête magnétique M1 au pôle voisin $18_{12}$ de la même colonne et d'un second pont saturable 63 issu du premier pôle $17_{12}$ de la tête magnétique M1 et se projetant vers le pôle $18_{12}$. L'extrémité du pont 63 qui se trouve alors au-dessus du plot $18'_{12}$ est séparée du pôle $18_{12}$ par un intervalle amagnétique 31. Dans l'exemple particulier décrit où il y a à la fois les éléments saturables 6 et 6', les seconds ponts 61 et 63 sont communs à des têtes magnétiques consécutives de la même colonne.

Sur la figure 4a, on a prévu une plaque 16 en matériau amagnétique, mais on peut également réaliser les pôles magnétiques, les entrefers et les éléments saturables directement sur la surface supérieure des plots en prévoyant un matériau amagnétique entre les plots qui puisse constituer une surface plane avec ces plots.

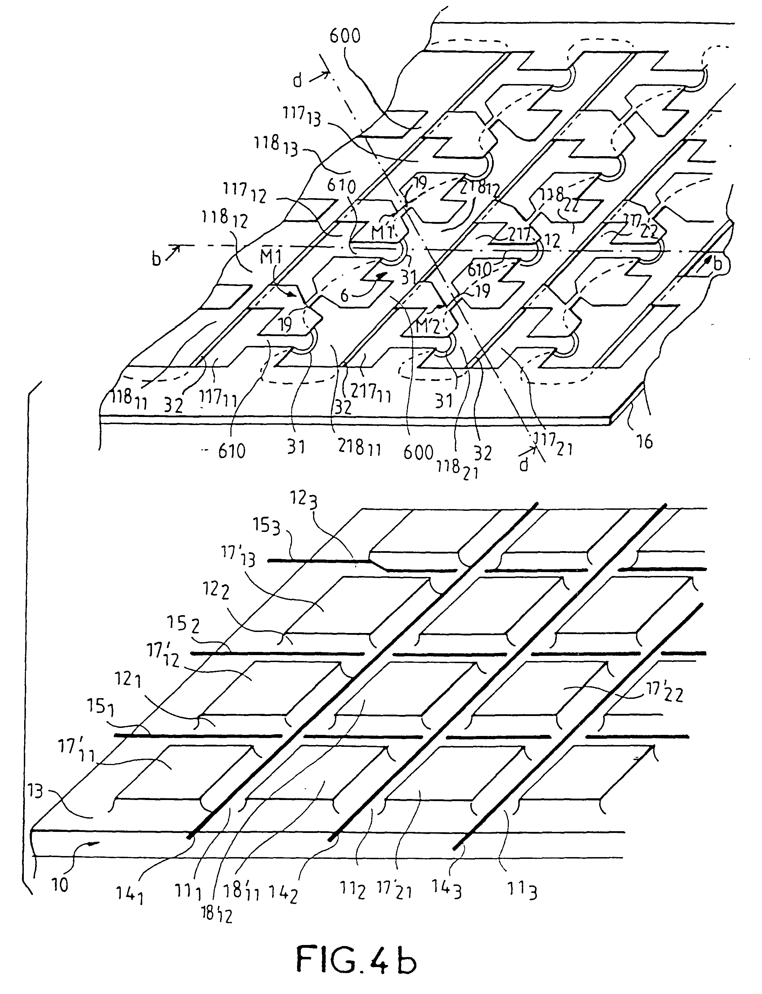

La figure 4b représente encore une autre variante d'un dispositif matriciel d'enregistrement selon l'invention. Il est comparable à celui de la figure 4a au moins au niveau du substrat rainuré 10 avec les plots $17'_{ij}$ et $18'_{kj}$.

Mais maintenant un plot $17'_{ij}$ ou $18'_{kj}$ est recouvert de deux pôles référencés $117_{ij}$ et $118_{ij}$ sur le plot $17'_{ij}$ et $217_{kj}$ et $218_{kj}$ sur le plot $18'_{kj}$. Les deux pôles qui surmontent un même plot sont séparés par un intervalle amagnétique 32.

Comme dans l'exemple décrit à la figure 4a, ces pôles comportent une partie de plus grande surface au-dessus du plot correspondant ainsi qu'un prolongement de l'un des coins du pôle au-dessus de l'intersection des conducteurs. L'entrefer 19 d'une tête magnétique est formé entre deux prolongements en vis-à-vis.

Par exemple, le circuit magnétique de la tête magnétique M'1 comporte la portion de substrat 10 qui englobe les plots $17'_{13}$, $18'_{12}$ et l'intersection des rainures $12_2$ et $11_1$, le premier pôle $117_{13}$, le second pôle $218_{12}$ ainsi que l'entrefer 19 qui est entre les prolongements de ces pôles. Le circuit magnétique de la tête M'2 comporte la portion de substrat 10 qui englobe les plots $18'_{12}$, $17'_{21}$ et l'intersection des rainures $12_1$ et $11_2$, le premier pôle $217_{12}$, le second pôle $118_{21}$ ainsi que l'entrefer 19 qui est entre les prolongations de ces pôles. Ces deux têtes voisines M'1 et M'2 ont un plot commun $18'_{12}$. Le pôle $218_{12}$ couple magnétiquement le plot

commun $18'_{12}$ à l'entrefer 19 de la tête M'1 à travers une liaison amagnétique sur laquelle repose le pôle $218_{12}$. Cette liaison n'est pas visible sur la figure 4b. Le pôle $217_{12}$ séparé du pôle $218_{12}$ par l'intervalle amagnétique 32 couple magnétiquement le plot commun $18'_{12}$ à l'entrefer 19 de la tête magnétique M'2.

Dans cet exemple, on a représenté pour chaque tête magnétique un élément saturable 6 formé de deux ponts saturables 600 et 610. Ils relient magnétiquement les deux pôles d'une tête par l'intermédiaire d'un pôle voisin de ses deux pôles.

Par exemple, le circuit magnétique de la tête magnétique M1 formé des plots $17'_{12}$, $18'_{11}$, du premier pôle $117_{12}$, du second pôle $218_{11}$ comporte aussi l'élément saturable 6 formé du pont 610 et du pont 600. Le pont 610 relie magnétiquement le premier pôle $117_{12}$ au pôle voisin $218_{12}$ de la même ligne mais de la colonne voisine et le pont 600 relie magnétiquement ce pôle voisin $218_{12}$ au second pôle $218_{11}$. Le pont 610 issu du pôle $117_{12}$ se projette vers le pôle $218_{12}$. Un intervalle amagnétique 31 est aménagé entre l'extrémité du pont 610 et le pôle $218_{12}$ au dessus du plot $18'_{12}$.

Lors de l'excitation de la tête magnétique M1, le flux magnétique créé au niveau des plots $17'_{12}$ et $18'_{11}$ passe par les deux pôles qui surmontent chacun de ces plots à savoir $117_{12}$ et $118_{12}$ pour le plot $17'_{12}$ et $218_{11}$ et $217_{11}$ pour le plot $18'_{11}$. En conséquence les deux pôles $118_{12}$ et $217_{11}$ qui ne sont pas séparés par l'entrefer 19 de la tête M1 peuvent contribuer au passage du flux qui excite cette tête M1.

Les pôles sont généralement en sendust c'est à dire en alliage de fer, d'aluminium, et de silicium. Le matériau de l'élément saturable 6 .peut être réalisé à base de ferrite ou de sendust ou d'un autre matériau magnétique. Ce sendust peut être le même que celui des pôles ou un sendust dégradé c'est-à-dire à saturation plus faible, pour cela sa teneur en aluminium peut être supérieure à celle du sendust des pôles. Lorsque l'élément saturable est dans le même matériau que les pôles, il suffit de lui donner une section perpendiculaire à la surface du support à enregistrer, inférieure à celle des pôles qu'il sature pour un courant inférieur au courant d'écriture.

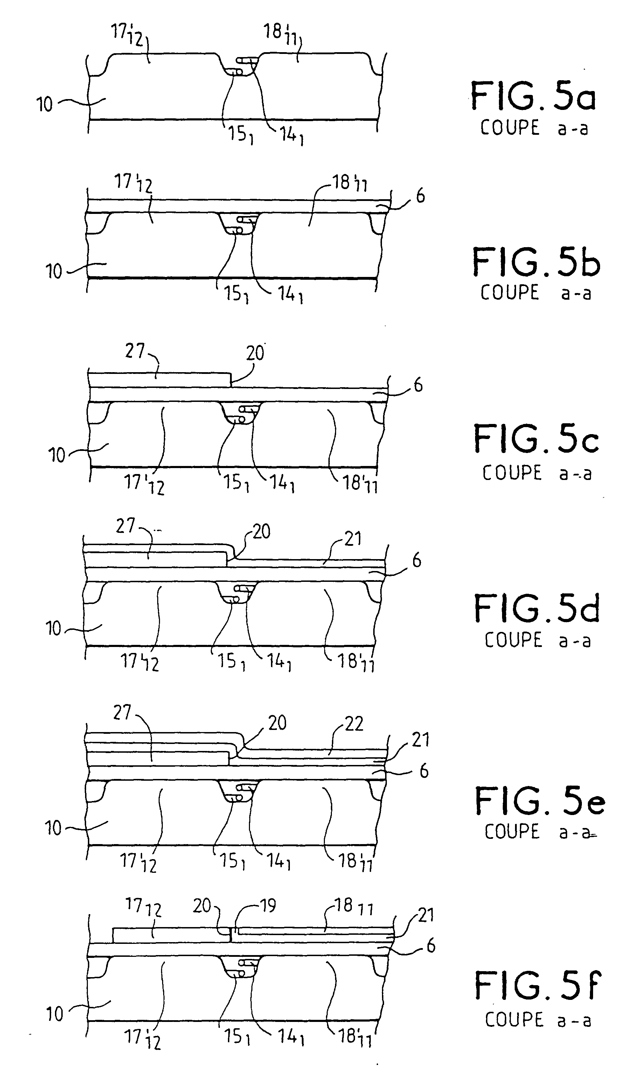

On va maintenant décrire un exemple de procédé de réalisation d'un dispositif d'enregistrement selon l'invention. On se réfère à la figure 3 en combinaison avec les figures 5a à 5f. La description est faite pour un dispositif matriciel d'enregistrement. On part d'un substrat 10 en matériau magnétique, en ferrite par exemple, rainuré. Il comporte deux séries de rainures rectilignes parallèles $11_1$, $11_2$, $11_3$,...$12_1$, $12_2$... Ces rainures se croisent sensiblement à angle droit, on a ainsi délimité des colonnes de plots $17'_{ij}$, $18'_{kj}$ alternées. On dispose dans chaque rainure au moins un conducteur électrique. Les conducteurs sont référencés $14_1$, $14_2$, $14_3$,...$15_1$, $15_2$,... (figure 5a) . Les coupes des figures 5a à 5f sont réalisées selon l'axe a-a à l'intersection de deux rainures $11_1$, $12_1$ et donc au croisement de deux conducteurs $15_1$, $14_1$. On va ensuite former sur ce substrat 10 des premiers pôles $17_{ij}$, des seconds pôles $18_{kj}$ et des entrefers 19 entre un premier pôle et un second pôle. On réalise ainsi le circuit magnétique pour chaque tête magnétique. Au moins un élément saturable est prévu par entrefer, il est situé en-dehors de l'entrefer et relie magnétiquement deux parties du circuit magnétique en enjambant l'entrefer.

Dans l'exemple des figures 3 et 5a à 5f, l'élément saturable 6 est une plaque qui recouvre les plots $17'_{ij}$,$18'_{ij}$ et les rainures $11_1$, $11_2$, $12_1$, $12_2$. On la fixe au substrat 10 par collage par exemple (figure 5b). Les pôles et l'entrefer sont ensuite réalisés par exemple en couches minces comme décrit dans le brevet FR 2 630 853. On aurait pu aussi combler les rainures avec un matériau amagnétique, puis aplanir, puis faire l'élément saturable 6 sous forme d'une couche.

On aurait pu aussi former les pôles et l'entrefer sur une plaque en matériau amagnétique et déposer l'élément saturable 6 sous la forme d'une couche mince de l'ordre du micromètre au dos de la plaque.

On dépose tout d'abord sur l'élément saturable 6 ou sur la plaque en matériau amagnétique une première couche magnétique 27 dont un bord passe par les entrefers 19 des têtes magnétiques d'une même colonne et qui seront formés ultérieurement. Cette couche englobe les premiers pôles $17_{ij}$ qui seront découpés ultérieurement. Cette formation peut se faire, par exemple, par photogravure chimique ou ionique avec un premier masque (figure 5c) ; cette couche est formée d'autant de bandes qu'il y a de colonnes de premiers pôles $17_{ij}$. Le contour du masque est représenté en pointillés sur la figure 3. Cette première couche 27 comporte, au moins au niveau des entrefers, un flanc 20 faisant un angle avec la surface de l'élément saturable 6 ou de la plaque amagnétique.

On dépose ensuite sur la première couche 27 et l'élément saturable 6 ou la plaque amagnétique, une couche 21 en matériau amagnétique (figure 5d) . Cette couche 21 est moins épaisse que la première couche 27 magnétique.

On dépose ensuite sur la couche en matériau amagnétique 21 une seconde couche 22 en matériau magnétique (figure 5e).

On usine et polit les couches ainsi déposées de manière à faire affleurer la première couche 27. La première couche 27 et la seconde couche 22 sont découpées aux contours désirés pour les premiers pôles $17_{ij}$ et les seconds pôles $18_{kj}$, par photogravure chimique ou ionique par exemple avec un second masque (figure 5f). Sur cette figure on voit que le second pôle $18_{11}$ est séparé du premier pôle $17_{12}$ au niveau du flanc 20 par l'entrefer 19 qui correspond à la couche amagnétique 21. Au lieu d'utiliser ce procédé pour réaliser un dispositif d'enregistrement matriciel, on peut l'utiliser pour réaliser une seule tête magnétique et dans ce cas le substrat rainuré ne comporte que deux plots.

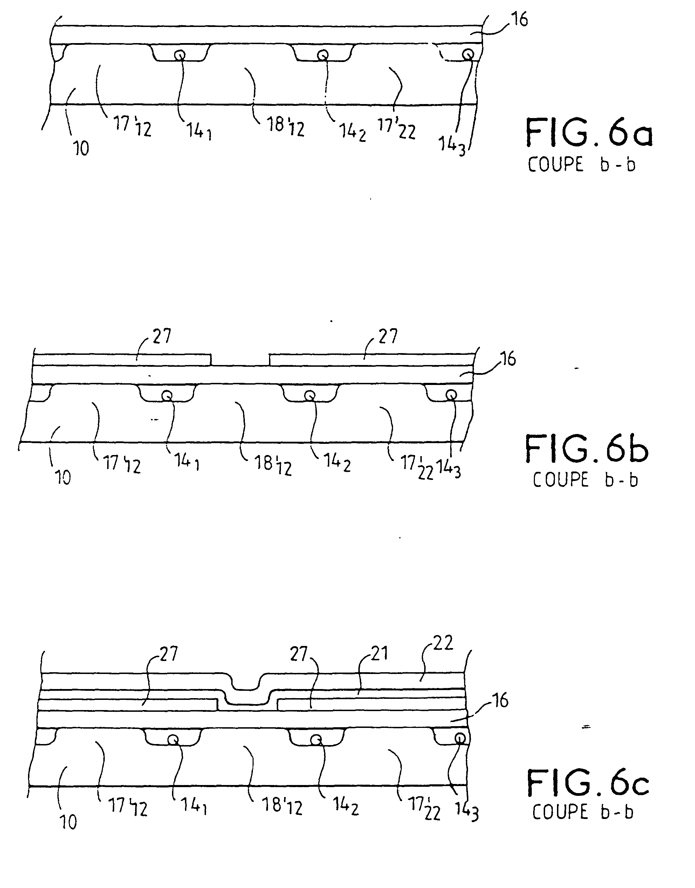

Un procédé similaire peut être utilisé lorsque l'élément saturable est situé dans le même plan que l'entrefer et les pôles. L'élément saturable est au moins en partie une extension d'un des pôles. On se réfère maintenant à la figure 4a et aux figures 6a à 6f.

On part comme précédemment d'un substrat 10 en matériau magnétique rainuré avec des plots en saillie et contenant au moins un conducteur électrique $14_1$, $14_2$ par rainure. On recouvre ce substrat 10 côté plots d'une plaque 16 en matériau amagnétique (figure 6a).

On peut se passer de la plaque 16 en matériau amagnétique si l'on remplit les rainures avec un matériau amagnétique tel qu'une résine de manière à ce que la surface du substrat 10 du côté des plots soit sensiblement plane.

On dépose ensuite sur la plaque 16 ou directement sur la surface plane du substrat 10, une première couche d'un matériau magnétique 27 dont un bord passe par les entrefers des têtes magnétiques de la même colonne formés ultérieurement. Cette première couche 27 englobe les premiers pôles $17_{ij}$ et au moins une partie des éléments saturables 6 qui seront découpés ultérieurement (figure 6b). Cette première couche 27 couvre totalement les premiers plots $17'_{ij}$ et partiellement les seconds plots $18'_{kj}$.

On recouvre ensuite comme précédemment la première couche 27 en matériau magnétique d'une couche en matériau amagnétique 21 moins épaisse que la première couche. On dépose ensuite sur la couche en matériau amagnétique 21 une seconde couche 22 en matériau magnétique (figure 6c). On usine et on polit la surface supérieure du substrat 10 de manière à faire apparaître la première couche 27. On découpe ensuite les couches magnétiques 27 et 22 au contour des premiers pôles $17_{ij}$, des seconds pôles $18_{kj}$ et des éléments saturables 6 et 6''.

Dans cet exemple, les éléments saturables 6 sont réalisés en même temps que les premiers pôles $17_{ij}$ car ils ont une extrémité reliée directement aux premiers pôles. Sur la figure 4a on a vu que ces éléments saturables 6 correspondent aux ponts 60 (reliant un premier pôle $17_{ij}$ aux premiers pôles voisins de la même colonne soit $17_{ij+1}$ ou $17_{ij-1}$) et aux ponts 61 (reliant un premier pôle $17_{ij}$ à un second pôle voisin de la même ligne soit $18_{i-1,j}$ ou $18_{i+1,j}$). Dans cet exemple, une partie des éléments saturables 6' est réalisée en même temps que les premiers pôles $17_{ij}$ car ils ont une extrémité reliée directement aux premiers pôles. Il s'agit des ponts 63.

L'autre partie des éléments saturables 6' est réalisée en même temps que les seconds pôles $18_{ij}$. Il s'agit des ponts 62 qui ont leurs deux extrémités reliées directement aux seconds pôles de la même colonne.

L'intervalle 31 empli de matériau amagnétique n'a pratiquement pas d'influence sur la circulation du flux magnétique en raison de son étroitesse et de sa position au dessus d'un plot.

Le bord du premier masque utilisé lors du dépôt de la première couche magnétique 27 et représenté en pointillés sur la figure 4a passe par les entrefers 19-et par ces intervalles 31. En conséquence, le bord de la première couche 27 passe par les entrefers 19 et par ces intervalles 31.

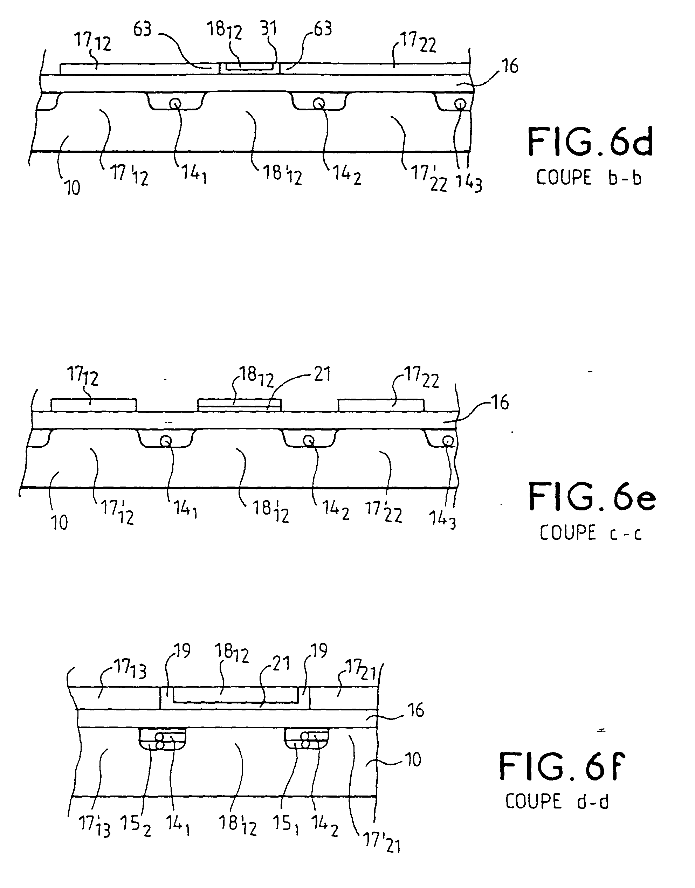

La figure 6d est une coupe de la figure 4a selon l'axe b-b, elle coupe les ponts 63. La figure 6e est une coupe de la figure 4a selon l'axe c-c elle ne coupe pas de ponts. La figure 6f est une coupe de la figure 4a selon l'axe d-d, elle montre les entrefers 19 de deux têtes magnétiques voisines ayant un pôle $18_{12}$ en commun, l'une des têtes a comme pôles les pôles $17_{13}$ et $1812$ et l'autre les pôles $18_{12}$ et $17_{21}$.

Un autre exemple de procédé de réalisation d'un dispositif d'enregistrement aurait consisté à réaliser au moins un élément saturable en même temps que le premier pôle $17_{12}$ de la tête magnétique M1 par exemple, cet élément reliant magnétiquement le premier pôle $17_{12}$ au second pôle $18_{11}$, formé ultérieurement, sans passer par un pôle voisin $17_{11}$ ou $18_{12}$ du premier pôle.

On peut aussi réaliser l'élément saturable après avoir fait les pôles, comme on vient de le décrire, en déposant sur les pôles $17_{ij}$, $18_{kj}$ une couche mince plus fine que l'épaisseur des pôles. Les pôles sont ensuite de nouveau découverts au moins partiellement par polissage par exemple.

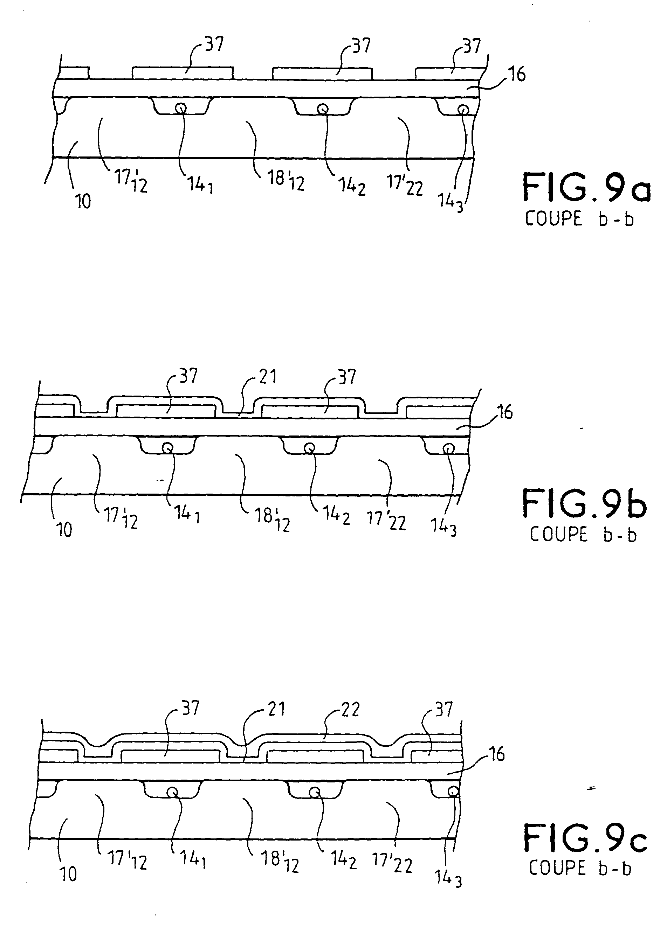

Un autre exemple d'un procédé de réalisation d'un dispositif d'enregistrement selon l'invention est illustré à la figure 4b associée aux figures 9a à 9e.

Cette variante est comparable à celle décrite aux figures 4a et 6a à 6f. On part d'un substrat magnétique identique à celui décrit à la figure 4a.

On commence par déposer la première couche magnétique 37. Cette couche 37 englobe les premiers pôles $117_{ij}$ et $217_{ij}$ et au moins une partie des éléments saturables 6 qui seront découpés ultérieurement (figure 9a). Cette couche 37 est formée de bandes qui recouvrent partiellement des colonnes de premiers plots $17'_{ij}$, de seconds plots $18'_{kj}$ situées de part et d'autre d'un conducteur colonne $14_i$ et l'espace qui surmonte ce conducteur.

On dépose sur la première couche 37, la couche 21 en matériau amagnétique (figure 9b) puis la seconde couche 22 en matériau magnétique (figure 9c).

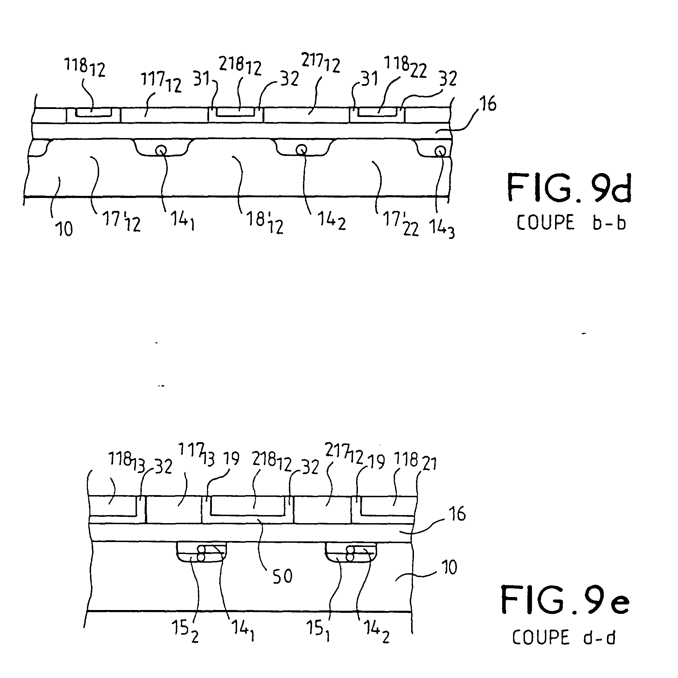

On usine et polit les couches ainsi déposées de manière à faire affleurer la première couche 37 magnétique puis l'on découpe les couches magnétiques au contour des premiers pôles $117_{ij}$ et $217_{kj}$, des seconds pôles $118_{ij}$ et $218_{kj}$ et des éléments saturables 6 (figure 9d). Une première partie des éléments saturables est découpée pendant la découpe des premiers pôles $117_{ij}$ et $217_{kj}$. Cette partie correspond à des ponts 610 qui relient magnétiquement les premiers pôles $117_{ij}$ ou $217_{kj}$ à un second pôle voisin, respectivement $218_{ij}$ ou $118_{k+1,j}$, placé sur un plot différent mais sur la même ligne. Ces ponts 610 enjambent les rainures $11_1$, $11_2$..... Ces ponts 610 ont une de leur extrémité au dessus d'un premier plot $17'_{ij}$ et l'autre extrémité au-dessus d'un se-

cond plot $18'_{ij}$. Ces ponts 610 ne sont pas directement en contact avec les seconds pôles $218_{ij}$ ou $118_{k+1,j}$, un premier intervalle 31 amagnétique est aménagé entre le pont 610 et le second pôle $218_{ij}$ ou $118_{k+1,j}$ et ce premier intervalle 31 se trouve au dessus d'un plot $17'_{ij}$ ou $18'_{ij}$. Ce premier intervalle 31 n'a pratiquement pas d'influence sur la circulation du flux magnétique en raison de son étroitesse et de sa proximité du plot.

Le masque utilisé pour la réalisation de la première couche 37 et représenté en pointillés sur la figure 4b, a un bord qui définit les entrefers 19 et les premiers intervalles 31.

Une seconde partie des éléments saturables est découpée en même temps que les seconds pôles $118_{ij}$ et $218_{kj}$. Cette partie correspond à des ponts 600 qui relient directement les seconds pôles $118_{ij}$ ou $218_{kj}$ à un pôle voisin de la même colonne soit $118_{i+1,j}$ ou $118_{i-1,j}$ pour le pôle $118_{ij}$ ou soit $218_{k+1,j}$ ou $218_{k-1,j}$ pour le pôle $218_{kj}$. Ces seconds ponts 600 enjambent les rainures $12_1$, $12_2$,.....

Dans cette variante, un plot $17'_{ij}$ est surmonté d'une part d'un premier pôle $117_{ij}$ et d'autre part d'un second pôle $118_{ij}$. Il en est de même pour les pôles $217_{kj}$ et $218_{kj}$ qui surmontent un même plot $18'_{kj}$. Ces deux pôles qui surmontent un même plot sont séparés par un second intervalle 32 en matériau amagnétique. Ce second intervalle 32 n'a pratiquement pas d'influence sur la circulation du flux magnétique car il est étroit et se trouve au niveau d'un plot. Une liaison amagnétique 50 située sous un pôle $218_{kj}$ ou $118_{ij}$ est prévue pour relier l'intervalle amagnétique 32 à l'entrefer 19 que ce pôle contribue à définir. Le masque utilisé pour la réalisation de la première couche magnétique 37 a un bord qui passe par ces seconds intervalles amagnétiques 32. En conséquence, la première couche magnétique 37 a un bord qui passe par ces seconds intervalles amagnétiques 32.

L'avantage de cette variante est que deux têtes magnétiques ayant un plot commun ont des entrefers et des pôles tous orientés dans le même sens. La figure 9e est une coupe de la figure 4b selon l'axe dd. On voit que les coupes de deux têtes magnétiques ayant un plot commun sont identiques, ce qui n'était pas le cas sur la figure 6f.

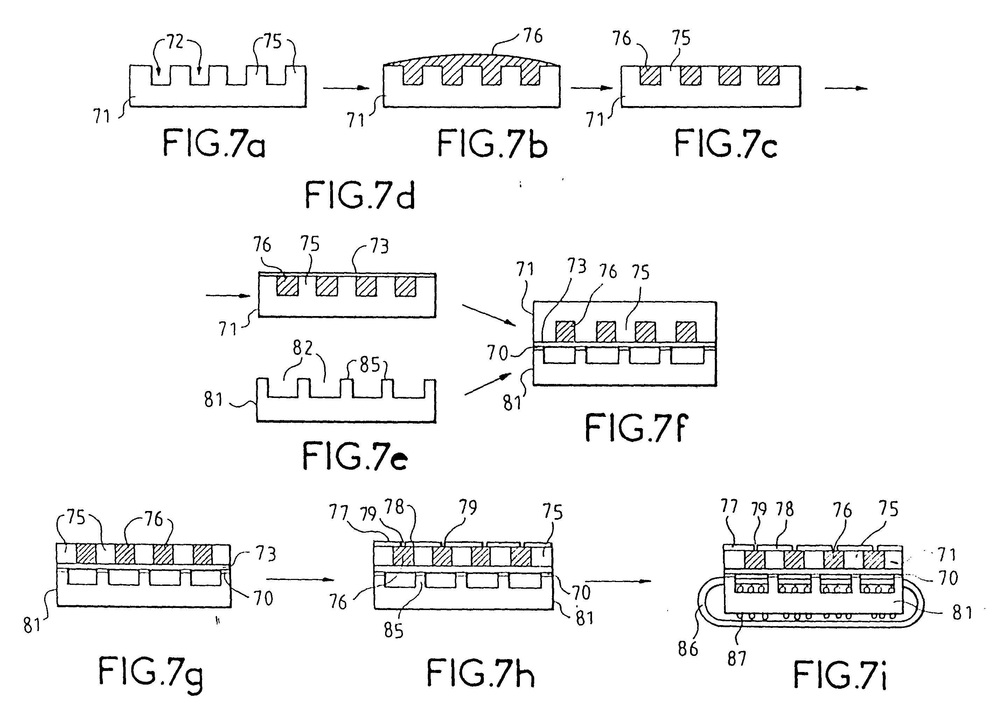

Au lieu de réaliser les pôles, l'entrefer sur un substrat magnétique sur une couche amagnétique, on peut les réaliser en couches minces comme on l'a déjà décrit, sur un substrat composite magnétique amagnétique. Les figures 7a à 7i représentent en coupe un dispositif d'enregistrement au cours de sa réalisation.

On part d'un premier substrat 71 élémentaire en matériau magnétique et rainuré délimitant des plots 75 en saillie des têtes magnétiques formées ultérieurement (figure 7a) . Ce substrat 71 comporte classiquement une première série de rainures 72 rectilignes et parallèles et une seconde série de rainures que l'on ne voit pas sur la figure et qui sont sensiblement normales à celles de la première série.

On remplit ensuite les rainures des deux séries d'un matériau amagnétique tel que du verre 76, en faisant de préférence déborder le matériau amagnétique pour avoir la certitude que les rainures sont emplies (figure 7b).

On usine le matériau amagnétique 76 de manière à mettre à nu les plots 75 (figure 7c).

On obtient un substrat composite matériau magnétique-matériau amagnétique. On dépose l'élément saturable 73 sous la forme d'une couche continue sur ce premier substrat élémentaire 71 côté plots 75 (figure 7d). L'épaisseur de cette couche est de l'ordre de 0,5 micromètre si les rainures ont un pas de l'ordre de 100 à 200 micromètres. On prend un second substrat élémentaire 81 en matériau magnétique rainuré avec des plots 85 en saillie. Ce second substrat 81 a de préférence sensiblement la même taille que le premier substrat 71 (figure 7e). Les centres des plots 75 du premier substrat 71 coïncident sensiblement avec les centres des plots 85 du second substrat 81. On assemble, par collage par exemple, le premier substrat 71 au second substrat 81, l'élément saturable 73 étant entre les deux substrats 81,71 (figure 7f) . Une partie des plots du premier substrat est en vis à vis avec les plots du second substrat. Le joint de colle porte la référence 70. Par usinage et polissage, on arase la surface libre du premier substrat de manière à faire affleurer les plots 75 et le matériau amagnétique 76 (figure 7g).

On forme ensuite les pôles 77,78 et l'entrefer 79 des têtes magnétiques, les pôles 77,78 surmontant les plots 75 et l'entrefer 79 étant au dessus du matériau amagnétique 76 (figure 7h). Les pôles et l'entrefer peuvent être réalisés par une technologie de couches minces comme on l'a décrit aux figures 6.

La dernière étape consiste à mettre en place les conducteurs électriques d'excitation 86,87 dans les rainures du second substrat élémentaire 81 (figure 7i).

Le joint de colle 70 constitue un élément de réluctance facilement utilisable. Son épaisseur e est de l'ordre de 5 micromètres. La valeur de la perméance de deux joints de colle sur des plots de 100 micromètres de côté est

$$L = \frac{\mu o \times S}{2e}$$

$\mu o$ est la perméabilité du vide et vaut $1,3 \cdot 10^{-6}$
S est la surface du joint de colle

$$L \cong 1{,}3nH$$

Le flux induit dans chaque plot par un courant I d'écriture de 300 mA. tour sur le support à inscrire est donné par:

$$\phi = L.I$$

$$\phi \approx 0{,}4\text{nWb}$$

La part de flux à masquer à l'aide de l'élément saturable est de l'ordre de 0,13 nWb, c'est-à-dire le tiers du flux induit. La section de l'élément saturable traversée par le flux est de l'ordre de 100 micromètres carrés s'il il est réalisé dans un matériau à saturation sous 1 tesla.

Au lieu de placer l'élément saturable en sandwich entre les deux substrats élémentaires, il est possible de le réaliser en même temps que les pôles. Il est également possible de le réaliser au dessus des pôles et de l'entrefer.

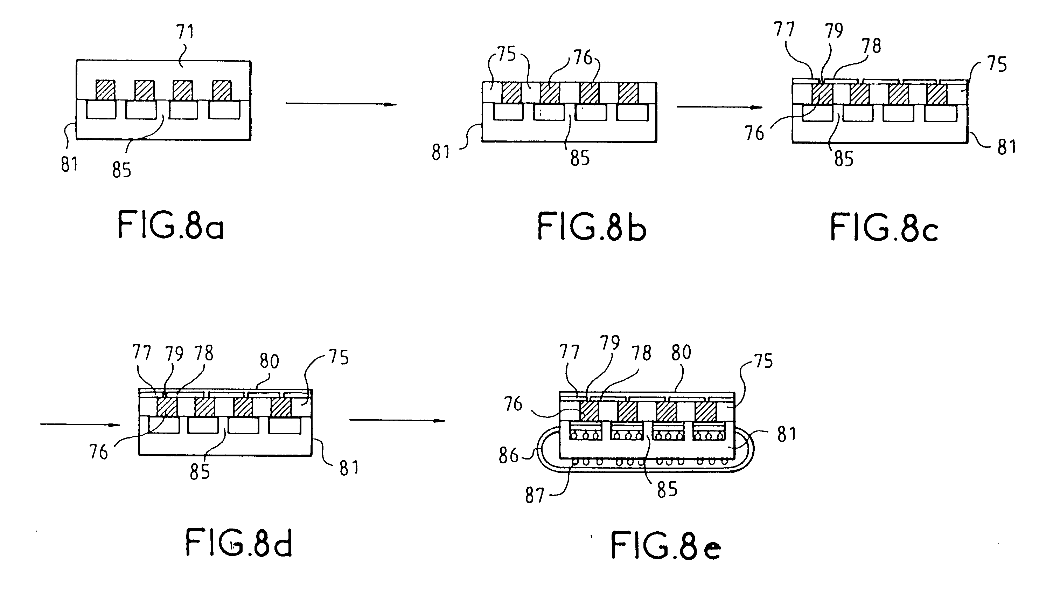

Pour cela on assemble par collage, par exemple, les substrats élémentaires des figures 7c et 7e (figure 8a). On usine la face libre du premier substrat 71 comme on l'a décrit à la figure 7g (figure 8b). On réalise les pôles 77,78 et l'entrefer 79 par exemple par dépôts de couches minces successives comme on l'a décrit aux figures 6 (figures 8c). On dépose ensuite l'élément saturable 80 sur les pôles 77,78 et l'entrefer 79 sous la forme d'une couche mince (figure 8d). Il ne reste plus qu'à mettre en place les conducteurs 86,87 comme à la figure 7i (figure 8e).

La description qui vient d'être faite présente plusieurs variantes de tête magnétique et plusieurs procédés de réalisation. Il est tout à fait possible de combiner ces variantes ou ces procédés entre eux.

## Revendications

1. Tête magnétique comportant un circuit magnétique avec deux pôles (2,2') séparés par un entrefer (4) dans lequel est induit un champ magnétique à partir d'un courant d'excitation,

   - au moins un élément saturable (6) placé en dehors de l'entrefer (4), en parallèle avec l'entrefer au point de vue circulation de flux magnétique; et telle que l'élément saturable, n'étant parcouru par aucun courant électrique de commande, est saturé lorsque le courant d'excitation est supérieur à un seuil, le champ magnétique atteignant l'entrefer et n'est pas saturé lorsque le courant d'excitation est inférieur au seuil, le champ magnétique restant confiné dans l'élément saturable n'atteingnant pas l'entrefer.

2. Tête magnétique selon la revendication 1, **caractérisée en ce que** l'élément saturable (6) a un point de saturation plus bas que celui des pôles (2,2').

3. Tête magnétique selon l'une des revendications 1 ou 2, **caractérisée en ce que** l'élément saturable (6) est situé au dessous de l'entrefer (4).

4. Tête magnétique selon la revendication 3, comportant un substrat (10) en matériau magnétique surmonté des pôles (17,18), **caractérisée en ce que** l'élément saturable (6) est en forme de couche insérée entre le substrat (10) et les pôles (17,18).

5. Tête magnétique selon la revendication 3, **caractérisée en ce que** le substrat est formé par l'assemblage de deux substrats élémentaires (81,71) avec des plots (85,75) se correspondant, l'élément saturable (73) en couche étant inséré entre les deux substrats élémentaires (71,81).

6. Tête magnétique selon l'une des revendications 1 ou 2, **caractérisée en ce que** l'élément saturable (6) relie les deux pôles (2,2').

7. Tête magnétique selon la revendication 5, **caractérisée en ce que** l'élément saturable (6) est dans le même plan que l'entrefer (4).

8. Tête magnétique selon l'une des revendications 6 ou 7 comportant un substrat (3) en matériau magnétique surmonté des pôles (2, 2'), **caractérisée en ce que** l'élément saturable (6) est une extension d'au moins l'un des pôles (2).

9. Tête magnétique selon la revendication 8 dont le substrat magnétique (3) comporte deux plots (8, 9) en saillie, surmontés des pôles (2, 2'), **caractérisée en ce que** l'extension d'un pôle (2) a son extrémité au dessus d'un plot (9) qui est surmonté par l'autre pôle (2'), cette extrémité étant séparée de cet autre pôle (2') par un intervalle amagnétique (60).

10. Tête magnétique selon la revendication 6, **caractérisée en ce que** l'élément saturable (80) est situé au dessus de l'entrefer (79).

11. Tête magnétique selon la revendication 10 comportant un substrat (10) en matériau magnétique surmonté des pôles ($17_{ij},18_{kj}$) **caractérisée en ce qu'**une couche en matériau amagnétique (16) est insérée entre le substrat (10) et les pôles ($17_{ij},18_{kj}$).

12. Tête magnétique selon l'une des revendications 1 à 11, **caractérisée en ce que** l'élément saturable (6) est réalisé dans le même matériau qu'au moins un des pôles ($17_{ij},18_{kj}$).

13. Dispositif matriciel **caractérisé en ce qu'**il comporte une pluralité de têtes magnétiques selon l'une des revendications 1 à 12.

14. Dispositif matriciel selon la revendication 13, **caractérisé en ce que** l'élément saturable (6) relie magnétiquement les deux pôles ($17_{12},18_{11}$) d'une tête magnétique (M1) par l'intermédiaire d'au moins un

pôle ($17_{11}$) d'une autre tête magnétique.

**15.** Dispositif matriciel selon la revendication 13, **caractérisé en ce que** l'élément saturable (6) est au moins en partie l'extension de l'un des pôles ($17_{12}$).

**16.** Dispositif matriciel selon la revendication 13, comportant un substrat magnétique (10) avec des plots ($17'_{12}$,$18'_{11}$) en saillie, **caractérisé en ce que** chaque plot ($17'_{12}$,$18'_{11}$) est surmonté d'au moins un pôle ($17_{12}$,$18_{11}$).

**17.** Dispositif matriciel salon la revendication 16, **caractérisé en ce que** lorsqu'un plot ($18'_{12}$) est surmonté de deux pôles ($218_{11}$, $217_{11}$), ils sont séparés par un intervalle amagnétique (32).

**18.** Dispositif matriciel selon la revendication 17, **caractérisé en ce que** l'un des pôles ($218_{11}$) surmonte une liaison amagnétique (50) qui relie l'intervalle amagnétique (32) à l'entrefer (19) que ce pôle contribue à délimiter.

**19.** Procédé de réalisation d'au moins une tête magnétique selon l'une des revendications 1 à 12, consistant à réaliser au moins un circuit magnétique avec deux pôles (2, 2') séparés par un entrefer (4) consistant à placer au moins un élément saturable (6) en parallèle avec l'entrefer (4) et en-dehors de l'entrefer, ledit élément saturable étant réalisé dans un matériau magnétique avec un point de saturation tel que l'élément saturable n'étant parcouru par aucun courant électrique de commande, celui-ci est saturé lorsque le courant d'excitation est inférieur à un seuil, le champ magnétique atteignant alors l'entrefer, et n'est pas saturé lorsque le courant d'excitation est inférieur au seuil, le champ magnétique restant confiné dans l'élément saturable n'atteignant pas l'entrefer.

**20.** Procédé selon la revendication 19, **caractérisé en ce qu'**il consiste à réaliser le circuit magnétique à partir d'un substrat magnétique (10), à former l'élément saturable (6) en couche au dessus du substrat magnétique, puis à déposer les pôles ($17_{ij}$,$18_{kj}$) sur l'élément saturable (6).

**21.** Procédé selon la revendication 19, **caractérisé en ce qu'**il consiste à réaliser le circuit magnétique à partir de deux substrats élémentaires (81,71) ayant des plots (85,75) qui se correspondent et à insérer l'élément saturable (73) entre les deux substrats élémentaires (81,71).

**22.** Procédé selon la revendication 19, **caractérisé en ce qu'**il consiste à réaliser le circuit magnétique à partir d'un substrat magnétique (10), à le recouvrir d'une couche amagnétique (16), puis à réaliser les

pôles ($17_{ij}$,$18_{kj}$) et l'élément saturable (6) au dessus de la couche amagnétique (16).

**23.** Procédé selon la revendication 19, **caractérisé en ce qu'**il consiste à réaliser le circuit magnétique à partir d'un substrat magnétique (10) avec des plots ($17'_{ij}$,$18'_{kj}$) en saillie, à remplir l'espace entre les plots d'un matériau amagnétique, à réaliser les pôles ($17_{ij}$, $18_{kj}$)et l'élément saturable (6) au dessus du substrat (10) côté plots.

**24.** Procédé selon l'une des revendications 22 ou 23, **caractérisé en ce qu'**il consiste:

à déposer au dessus du substrat (10) une première couche (27) en matériau magnétique destinée à former le premier pôle ($17_{ij}$) de la tête et au moins une extension (60, 61, 63) formant au moins une partie de l'élément saturable (6, 6'), cette couche (27) englobant au moins l'emplacement du premier pôle ($17_{ij}$) et de l'extension (60, 61, 63),

à déposer au dessus du substrat (10) et de la première couche (27) magnétique une couche (21) en matériau amagnétique, destinée à former l'entrefer (19),

à la recouvrir d'une seconde couche (22) en matériau magnétique destinée à former le second pôle ($18_{kj}$) de la tête et éventuellement l'autre partie (62) de l'élément saturable (6'),

à usiner et à polir la seconde couche magnétique (22) et la couche amagnétique (21) de manière à faire affleurer la première couche magnétique (27),

à découper le contour du premier pôle ($17_{ij}$) et de l'extension (60, 61, 63) au niveau de la première couche magnétique (27),

à découper le contour du second pôle ($18_{kj}$) et éventuellement de l'autre partie (62) de l'élément saturable (6') au niveau de la seconde couche magnétique (22).

**25.** Procédé selon la revendication 24, **caractérisé en ce que**, lorsqu'un plot ($17'_{ij}$) est surmonté d'un pôle ($17_{ij}$), il consiste à déposer la première couche magnétique (27) de manière à ce qu'elle recouvre le premier plot ($17'_{ij}$) de la tête et partiellement le second ($18'_{kj}$) de manière à ce que son bord passe par l'entrefer (19) et l'intervalle amagnétique (31) à l'extrémité de l'extension (61) au dessus du second plot ($18'_{kj}$).

**26.** Procédé selon la revendication 24, **caractérisé en ce que**, lorsqu'un plot ($18'_{11}$) est surmonté de deux pôles ($218_{11}$, $217_{11}$) séparés par un intervalle amagnétique (32), il consiste à déposer la première couche magnétique (37) de manière à ce qu'elle recouvre partiellement les deux plots ($17'_{12}$, $18'_{11}$) de la

tête (M1) et l'espace ($11_1$) qui les sépare et que son bord passe par l'entrefer (19), l'intervalle amagnétique (31) à l'extrémité de l'extension (610) au dessus du second plot ($18'_{11}$) et l'intervalle amagnétique (32) qui sépare les deux pôles ($218_{11}$, $217_{11}$).

27. Procédé selon l'une des revendications 19 à 26, **caractérisé en ce qu'**il consiste à associer le circuit magnétique à des conducteurs d'excitation ($14_i$, $15_k$).

**Patentansprüche**

1. Magnetkopf, mit einem magnetischen Kreis mit zwei Polen (2, 2'), die durch einen Luftspalt (4) getrennt sind, in dem durch einen Erregungsstrom ein Magnetfeld induziert wird,

   - wenigstens einem sättigbaren Element (6), das außerhalb des Luftspalts (4) angeordnet und in bezug auf die Zirkulation des magnetischen Flusses zum Luftspalt parallel ist; wobei das sättigbare Element, das von keinem elektrischen Steuerstrom durchflossen wird, gesättigt ist, wenn der Erregungsstrom größer als ein Schwellenwert ist, wobei das Magnetfeld dann den Luftspalt erreicht, und nicht gesättigt ist, wenn der Erregungsstrom kleiner als der Schwellenwert ist, wobei das Magnetfeld, das in dem sättigbaren Element eingeschlossen bleibt, dann den Luftspalt nicht erreicht.

2. Magnetkopf nach Anspruch 1, **dadurch gekennzeichnet, daß** das sättigbare Element (6) einen Sättigungspunkt hat, der niedriger als derjenige der Pole (2, 2') ist.

3. Magnetkopf nach einem der Ansprüche 1 oder 2, **dadurch gekennzeichnet, daß** sich das sättigbare Element (6) unter dem Luftspalt (4) befindet.

4. Magnetkopf nach Anspruch 3, der ein Substrat (10) aus einem magnetischen Werkstoff umfaßt, das durch die Pole (17, 18) erhöht ist, **dadurch gekennzeichnet, daß** das sättigbare Element (6) die Form einer Schicht hat, die zwischen das Substrat (10) und die Pole (17, 18) eingefügt ist.

5. Magnetkopf nach Anspruch 3, **dadurch gekennzeichnet, daß** das Substrat durch Zusammenfügen zweier elementarer Substrate (81, 71) mit sich entsprechenden Klötzen (85, 75) gebildet ist, wobei das schichtartige sättigbare Element (73) zwischen die beiden elementaren Substrate (71, 81) eingefügt ist.

6. Magnetkopf nach einem der Ansprüche 1 oder 2, **dadurch gekennzeichnet, daß** das sättigbare Element (6) die beiden Pole (2, 2') verbindet.

7. Magnetkopf nach Anspruch 5, **dadurch gekennzeichnet, daß** sich das sättigbare Element (6) in derselben Ebene wie der Luftspalt (4) befindet.

8. Magnetkopf nach einem der Ansprüche 6 oder 7, mit einem Substrat (3) aus einem magnetischen Werkstoff, das durch die Pole (2, 2') erhöht ist, **dadurch gekennzeichnet, daß** das sättigbare Element (6) eine Erweiterung wenigstens eines der Pole (2) ist.

9. Magnetkopf nach Anspruch 8, dessen magnetisches Substrat (3) zwei vorstehende Klötze (8, 9) umfaßt, die durch die Pole (2, 2') erhöht sind, **dadurch gekennzeichnet, daß** sich das Ende der Erweiterung eines Pols (2) über einem Klotz (9) befindet, über dem der andere Pol (2') angebracht ist, wobei dieses Ende von diesem anderen Pol (2') durch einen nichtmagnetischen Zwischenraum (60) getrennt ist.

10. Magnetkopf nach Anspruch 6, **dadurch gekennzeichnet, daß** sich das sättigbare Element (80) über dem Luftspalt (79) befindet.

11. Magnetkopf nach Anspruch 10, mit einem Substrat (10) aus einem magnetischen Werkstoff, das durch die Pole ($17_{ij}$; $18_{kj}$) erhöht ist, **dadurch gekennzeichnet, daß** zwischen das Substrat (10) und die Pole ($17_{ij}$, $18_{kj}$) eine Schicht aus einem nichtmagnetischen Werkstoff (16) eingefügt ist.

12. Magnetkopf nach einem der Ansprüche 1 bis 11, **dadurch gekennzeichnet, daß** das sättigbare Element (6) aus demselben Werkstoff wie wenigstens einer der Pole ($17_{ij}$, $18_{kj}$) verwirklicht ist.

13. Matrixförmige Vorrichtung, **dadurch gekennzeichnet, daß** sie mehrere Magnetköpfe nach einem der Ansprüche 1 bis 12 umfaßt.

14. Matrixförmige Vorrichtung nach Anspruch 13, **dadurch gekennzeichnet, daß** das sättigbare Element (6) die beiden Pole ($17_{12}$, $18_{11}$) eines Magnetkopfs (M1) über wenigstens einen Pol ($17_{11}$) eines anderen Magnetkopfs magnetisch verbindet.

15. Matrixförmige Vorrichtung nach Anspruch 13, **dadurch gekennzeichnet, daß** das sättigbare Element (6) wenigstens teilweise die Erweiterung eines der Pole ($17_{12}$) ist.

16. Matrixförmige Vorrichtung nach Anspruch 13, mit einem magnetischen Substrat (10) mit vorstehenden Klötzen ($17'_{12}$, $18'_{11}$), **dadurch gekennzeich-**

net, daß jeder Klotz ($17'_{12}$, $18'_{11}$) durch wenigstens einen Pol ($17_{12}$, $18_{11}$) erhöht ist.

17. Matrixförmige Vorrichtung nach Anspruch 16, **dadurch gekennzeichnet, daß** dann, wenn ein Klotz ($18'_{12}$) durch zwei Pole ($218_{11}$, $217_{11}$) erhöht ist, diese durch einen nicht magnetischen Zwischenraum (32) getrennt sind.

18. Matrixförmige Vorrichtung nach Anspruch 17, **dadurch gekennzeichnet, daß** einer der Pole ($218_{11}$) durch eine nichtmagnetische Verbindung (50) erhöht ist, die den nichtmagnetischen Zwischenraum (32) mit dem Luftspalt (19) verbindet, zu dessen Begrenzung dieser Pol beiträgt.

19. Verfahren zum Herstellen wenigstens eines Magnetkopfs nach einem der Ansprüche 1 bis 12, das darin besteht, wenigstens einen magnetischen Kreis mit zwei Polen (2, 2'), die durch einen Luftspalt (4) getrennt sind, zu verwirklichen, und darin besteht, wenigstens ein sättigbares Element (6) parallel zum Luftspalt (4) und außerhalb des Luftspalts anzuordnen, wobei das sättigbare Element (6) aus einem magnetischen Werkstoff verwirklicht ist, das einen Sättigungspunkt besitzt, derart, daß das sättigbare Element (6), das von keinem elektrischen Steuerstrom durchflossen wird, gesättigt wird, wenn der Erregungsstrom größer als ein Schwellenwert ist, wobei der magnetische Kreis dann den Luftspalt erreicht, und nicht gesättigt wird, wenn der Erregungsstrom kleiner als der Schwellenwert ist, wobei das Magnetfeld, das in dem sättigbaren Element eingeschlossen bleibt, dann den Luftspalt nicht erreicht.

20. Verfahren nach Anspruch 19, **dadurch gekennzeichnet, daß** es darin besteht, den magnetischen Kreis ausgehend von einem magnetischen Substrat (10) zu verwirklichen, das sättigbare Element (6) in Form einer Schicht über dem magnetischen Substrat zu bilden und dann die Pole ($17_{ij}$, $18tkj$) auf dem sättigbaren Element (6) abzulagern.

21. Verfahren nach Anspruch 19, **dadurch gekennzeichnet, daß** es darin besteht, den magnetischen Kreis ausgehend von zwei elementaren Substraten (81, 71) mit sich entsprechenden Klötzen (85, 75) zu verwirklichen und das sättigbare Element (73) zwischen die beiden elementaren Substrate (81, 71) einzufügen.

22. Verfahren nach Anspruch 19, **dadurch gekennzeichnet, daß** es darin besteht, den magnetischen Kreis ausgehend von einem magnetischen Substrat (10) zu verwirklichen, es mit einer nichtmagnetischen Schicht (16) zu bedecken und dann die Pole ($17_{ij}$, $18_{kj}$) und das sättigbare Element (6) über der nicht magnetischen Schicht (16) zu verwirklichen.

23. Verfahren nach Anspruch 19, **dadurch gekennzeichnet, daß** es darin besteht, den magnetischen Kreis ausgehend von einem magnetischen Substrat (10) mit vorstehenden Klötzen ($17'_{ij}$, $18'_{kj}$) zu verwirklichen, den Raum zwischen den Klötzen mit einem nichtmagnetischen Werkstoff zu füllen und die Pole ($17_{ij}$, $18_{kj}$) und das sättigbare Element (6) über dem Substrat (10) neben den Klötzen zu verwirklichen.

24. Verfahren nach einem der Ansprüche 22 oder 23, **dadurch gekennzeichnet, daß** es darin besteht:

   über dem Substrat (10) eine erste Schicht (27) aus einem magnetischen Werkstoff abzulagern, die dazu bestimmt ist, den ersten Pol ($17_{ij}$) des Kopfes und wenigstens eine Erweiterung (60, 61, 63) zu bilden, die wenigstens einen Teil des sättigbaren Elements (6, 6') bildet, wobei diese Schicht (27) wenigstens den Ort des ersten Pols ($17_{ij}$) und der Erweiterung (60, 61, 63) einschließt,
   über dem Substrat (10) und der ersten magnetischen Schicht (27) eine Schicht (21) aus einem nichtmagnetischen Werkstoff abzulagern, die dazu bestimmt ist, den Luftspalt (19) zu bilden,
   sie mit einer zweiten Schicht (22) aus einem magnetischen Werkstoff zu bedecken, die dazu bestimmt ist, den zweiten Pol ($18_{kj}$) des Kopfes und eventuell den anderen Teil (62) des sättigbaren Elements (6') zu bilden,
   die zweite magnetische Schicht (22) und die nichtmagnetische Schicht (21) in der Weise zu bearbeiten und zu polieren, daß sie mit der ersten magnetischen Schicht (27) bündig ist,
   den Umriß des ersten Pols ($17_{ij}$) und der Erweiterung (60, 61, 63) auf Höhe der ersten magnetischen Schicht (27) auszuschneiden,
   den Umriß des zweiten Pols ($18_{kj}$) und eventuell des anderen Teils (62) des sättigbaren Elements (6') auf Höhe der zweiten magnetischen Schicht (22) auszuschneiden.

25. Verfahren nach Anspruch 24, **dadurch gekennzeichnet, daß** es dann, wenn ein Klotz ($17'_{ij}$) durch einen Pol ($17_{ij}$) erhöht ist, darin besteht, die erste magnetische Schicht (27) in der Weise abzulagern, daß sie den ersten Klotz ($17'_{ij}$) des Kopfes und teilweise den zweiten ($18'_{kj}$) in der Weise bedeckt, daß ihr Rand über den Luftspalt (19) und den nichtmagnetischen Zwischenraum (31) bis zu dem Ende der Erweiterung (61) über dem zweiten Klotz ($18'_{kj}$) verläuft.

26. Verfahren nach Anspruch 24, **dadurch gekenn-**

**zeichnet, daß** es dann, wenn ein Klotz ($18'_{11}$) durch zwei durch einen nichtmagnetischen Zwischenraum (32) getrennte Pole ($218_{11}$, $217_{11}$) erhöht ist, darin besteht, die erste magnetische Schicht 837) in der Weise abzulagern, daß sie die zwei Pole ($17'_{12}$, $18'_{11}$) des Kopfes (M1) und den sie trennenden Zwischenraum ($11_1$) teilweise bedeckt und daß ihr Rand über den Luftspalt (19) und den nicht magnetischen Zwischenraum (31) zu dem Ende der Erweiterung (610) über dem zweiten Klotz ($18'_{11}$) und dem die beiden Pole ($218_{11}$, $217_{11}$) trennenden nichtmagnetischen Zwischenraum (32) verläuft.

**27.** Verfahren nach einem der Ansprüche 19 bis 26, **dadurch gekennzeichnet, daß** es darin besteht, dem magnetischen Kreis Erregungsleiter ($14_j$, $15_k$) zuzuordnen.

**Claims**

**1.** Magnetic head comprising a magnetic circuit with two poles (2, 2') separated by a gap (4) in which a magnetic field is induced by an excitation current,

- at least one saturable element (6) placed outside the gap (4), in parallel with the gap from the standpoint of magnetic flux circulation; and such that the saturable element, through which no electrical control current passes, is saturated when the excitation current is greater than a threshold value, the magnetic field reaching the gap, and is not saturated when the excitation current is less than the threshold value, the magnetic field remaining confined in the saturable element and not reaching the gap.

**2.** Magnetic head according to Claim 1, **characterized in that** the saturable element (6) has a saturation point which is lower than that of the poles (2, 2').

**3.** Magnetic head according to either of Claims 1 and 2, **characterized in that** the saturable element (6) is located below the gap (4).

**4.** Magnetic head according to Claim 3, comprising a substrate (10) made of magnetic material surmounted by poles (17, 18), **characterized in that** the saturable element (6) is in the form of a layer inserted between the substrate (10) and the poles (17, 18).

**5.** Magnetic head according to Claim 3, **characterized in that** the substrate is formed by assembling two elementary substrates (81, 71) with corresponding pads (85, 75), the layer of saturable element (73) being inserted between the two elementary substrates (71, 81).

**6.** Magnetic head according to either of Claims 1 and 2, **characterized in that** the saturable element (6) links the two poles (2, 2').

**7.** Magnetic head according to Claim 5, **characterized in that** the saturable element (6) is in the same plane as the gap (4).

**8.** Magnetic head according to either of Claims 6 and 7, comprising a substrate (3) made of magnetic material surmounted by poles (2, 2'), **characterized in that** the saturable element (6) is an extension of at least one of the poles (2).

**9.** Magnetic head according to Claim 8, the magnetic substrate (3) of which comprises two projecting pads (8, 9), surmounted by poles (2, 2'), **characterized in that** the extension of one pole (2) has its end above a pad (9) which is surmounted by the other pole (2'), this end being separated from this other pole (2') by a non-magnetic clearance (60).

**10.** Magnetic head according to Claim 6, **characterized in that** the saturable element (80) is located above the gap (79).

**11.** Magnetic head according to Claim 10, comprising a substrate (10) made of magnetic material surmounted by poles ($17_{ij}$, $18_{kj}$), **characterized in that** a layer made of non-magnetic material (16) is inserted between the substrate (10) and the poles ($17_{ij}$, $18_{kj}$).

**12.** Magnetic head according to one of Claims 1 to 11, **characterized in that** the saturable element (6) is made of the same material as at least one of the poles ($17_{ij}$, $18_{kj}$).

**13.** Matrix device **characterized in that** it comprises a plurality of magnetic heads according to one of Claims 1 to 12.

**14.** Matrix device according to Claim 13, **characterized in that** the saturable element (6) magnetically links the two poles ($17_{12}$, $18_{11}$) of a magnetic head (M1) via at least one pole ($17_{11}$) of another magnetic head.

**15.** Matrix device according to Claim 13, **characterized in that** the saturable element (6) is at least in part the extension of one of the poles ($17_{12}$).

**16.** Matrix device according to Claim 13, comprising a magnetic substrate (10) with projecting pads ($17'_{12}$, $18'_{11}$), **characterized in that** each pad ($17'_{12}$, $18'_{11}$) is surmounted by at least one pole ($17_{12}$, $18_{11}$).

**17.** Matrix device according to Claim 16, **characterized**

**in that**, when a pad ($18'_{12}$) is surmounted by two poles ($218_{11}$, $217_{11}$), they are separated by a non-magnetic clearance (32).

18. Matrix device according to Claim 17, **characterized in that** one of the poles ($218_{11}$) surmounts a non-magnetic connection (50) which links the non-magnetic clearance (32) to the gap (19) which this pole helps to define.

19. Process for producing at least one magnetic head according to one of Claims 1 to 12, consisting in producing at least one magnetic circuit with two poles (2, 2') separated by a gap (4), consisting in placing at least one saturable element (6) in parallel with the gap (4) and outside the gap, the said saturable element being produced in a magnetic material with a saturation point such that, since no electrical control current passes through it, it is saturated when the excitation current is greater than a threshold value, the magnetic field then reaching the gap, and is not saturated when the excitation current is less than the threshold value, the magnetic field remaining confined in the saturable element and not reaching the gap.

20. Process according to Claim 19, **characterized in that** it consists in producing the magnetic circuit from a magnetic substrate (10), in forming the saturable element (6) as a layer above the magnetic substrate, then in depositing the poles ($17_{ij}$, $18_{kj}$) on the saturable element (6).

21. Process according to Claim 19, **characterized in that** it consists in producing the magnetic circuit from two elementary substrates (81, 71) having corresponding pads (85, 75) and in inserting the saturable element (73) between the two elementary substrates (81, 71).

22. Process according to Claim 19, **characterized in that** it consists in producing the magnetic circuit from a magnetic substrate (10), in covering it with a non-magnetic layer (16), then in producing the poles ($17_{ij}$, $18_{kj}$) and the saturable element (6) above the non-magnetic layer (16).

23. Process according to Claim 19, **characterized in that** it consists in producing the magnetic circuit from a magnetic substrate (10) with projecting pads ($17'_{ij}$, $18'_{kj}$), in replacing the space between the pads with a non-magnetic material, in producing the poles ($17_{ij}$, $18_{kj}$) and the saturable element (6) above the substrate (10) on the pad side.

24. Process according to either of Claims 22 and 23, **characterized in that** it consists:

in depositing on top of the substrate (10) a first layer (27) made of magnetic material intended to form the first pole ($17_{ij}$) of the head and at least one extension (60, 61, 63) forming at least one part of the saturable element (6, 6'), this layer (27) including at least the location of the first pole ($17_{ij}$) and of the extension (60, 61, 63);
in depositing on top of the substrate (10) and on top of the first magnetic layer (27), a layer (21) made of non-magnetic material intended to form the gap (19);
in covering the first layer with a second layer (22) made of magnetic material intended to form the second pole ($18_{kj}$) of the head and possibly the other part (62) of the saturable element (6');
in machining and in polishing the second magnetic layer (22) and the non-magnetic layer (21) so as to make them flush with the first magnetic layer (27);
in cutting out the outline of the first pole ($17_{ij}$) and of the extension (60, 61, 63) at the first magnetic layer (27);
in cutting out the outline of the second pole ($18_{kj}$) and possibly of the other part (62) of the saturable element (6') at the second magnetic layer (22).

25. Process according to Claim 24, **characterized in that**, when a pad ($17'_{ij}$) is surmounted by a pole ($17_{ij}$), it consists in depositing the first magnetic layer (27) such that it covers the first pad ($17'_{ij}$) of the head and partially covers the second ($18'_{kj}$) such that its edge passes through the gap (19) and the non-magnetic clearance (31) at the end of the extension (61) above the second pad ($18'_{kj}$).

26. Process according to Claim 24, **characterized in that**, when a pad ($18'_{11}$) is surmounted by two poles ($218_{11}$, $217_{11}$) separated by a non-magnetic clearance (32), it consists in depositing the first magnetic layer (37) such that it partially covers the two pads ($17'_{12}$, $18'_{11}$) of the head (M1) and the space ($11_1$) which separates them and that its edge passes through the gap (19), the non-magnetic clearance (31) at the end of the extension (610) above the second pad ($18'_{11}$) and the non-magnetic clearance (32) which separates the two poles ($218_{11}$, $217_{11}$).

27. Process according to one of Claims 19 to 26, **characterized in that** it consists in linking the magnetic circuit to excitation conductors ($14_j$, $15_k$).

FIG.1a

FIG.1b

FIG.2

FIG.3

FIG.4a

FIG.4 b

FIG.5a
COUPE a-a

FIG.5b
COUPE a-a

FIG.5c
COUPE a-a

FIG.5d
COUPE a-a

FIG.5e
COUPE a-a

FIG.5f
COUPE a-a

**FIG.6a**
COUPE b - b

**FIG.6b**
COUPE b - b

**FIG.6c**
COUPE b - b

FIG.6d
COUPE b-b

FIG.6e
COUPE c-c

FIG.6f
COUPE d-d

EP 0 694 909 B1

FIG.7a

FIG.7b

FIG.7c

FIG.7d

FIG.7e

FIG.7f

FIG.7g

FIG.7h

FIG.7i

FIG.8a

FIG.8b

FIG.8c

FIG.8d

FIG.8e

EP 0 694 909 B1

FIG.9a
COUPE b-b

FIG.9b
COUPE b-b

FIG.9c
COUPE b-b

FIG. 9d
COUPE b-b

FIG. 9e
COUPE d-d